# EUROPÄISCHE PATENTSCHRIFT

(11) **EP 2 441 568 B1**
(45) Veröffentlichungstag und Bekanntmachung des Hinweises auf die Patenterteilung: **27.09.2017**
(21) Anmeldenummer: 11184902.2
(22) Anmeldetag: 12.10.2011
(51) Int. Cl.: B29C 65/10

(54) **Planenschweißmaschine**
Tarpaulin welding machine
Machine à souder des bâches

(30) Priorität: 14.10.2010 DE 102010038191
(43) Veröffentlichungstag der Anmeldung: 18.04.2012
(73) Patentinhaber: Dohle Extrusionstechnik GmbH, 53809 Ruppichteroth (DE)
(72) Erfinder: Dohle, Peter Christian, 53809 Ruppichteroth (DE)
(74) Vertreter: Fritz, Edmund Lothar

(56) Entgegenhaltungen:
- US-A- 4 440 588
- US-A- 5 935 357
- US-A1- 2003 019 566

## Beschreibung

Die vorliegende Erfindung betrifft eine Planenschweißmaschine zum Verschweißen wenigstens zweier in einander bereichsweise überlappenden Lagen liegenden Kunststofffolien, umfassend eine Heißluftvorrichtung zur Erwärmung des Folienmaterials sowie weiterhin umfassend wenigstens eine in Nähe der Heißluftvorrichtung und in Bewegungsrichtung der Maschine gesehen hinter der Heißluftvorrichtung angeordnete Druckrolle sowie eine mit der Druckrolle über eine gemeinsame Achse verbundene und zu dieser parallele beabstandete Laufrolle sowie umfassend einen Antrieb für diese Achse, wobei wenigstens eine der Rollen (Druckrolle oder Laufrolle) aus einer Stellung, in der sie im kraftschlüssigen Eingriff mit der angetriebenen Achse steht in eine neutrale Stellung bringbar ist, in der sie von der Achse entkoppelt und gegenüber dieser frei drehbar ist.

Eine Planenschweißmaschine zum Verschweißen wenigstens zweier in einander bereichsweise überlappenden Lagen liegenden Kunststofffolien ist beispielsweise aus der DE 92 14 304 U1 bekannt. Die dort als Folienschweißgerät bezeichnete Maschine schweißt thermoplastische Folienbahnen oder Kunststoffplanen indem mittels der Heißluftvorrichtung die Folienbahnen bis auf den Erweichungspunkt erwärmt werden. Die Folien sind so verlegt, dass sie sich in einem Bereich überlappen. Das Folienschweißgerät ist in Arbeitsrichtung entlang des Überlappungsbereichs verfahrbar und weist eine Druckrolle auf, die die zuvor erwärmten beiden Folienbahnen von oben her andrückt und dadurch verschweißt. Damit das Gerät nicht kippt ist in der Regel eine zweite Rolle parallel und mit Abstand zu der Druckrolle vorhanden, wobei beide Rollen über eine gemeinsame Achse miteinander verbunden sind. Um das Gerät zu verfahren wird diese Achse angetrieben.

Solange man mit einem solchen Gerät in gerader Richtung entlang der Folienkante im Überlappungsbereich verfährt, ist es unproblematisch, wenn sowohl die Druckrolle als auch die Laufrolle mit der gemeinsamen angetriebenen Achse starr verbunden sind. Es gibt jedoch auch Anwendungsfälle, bei denen man eine Kurvenfahrt ausführen muss, um Folienstücke miteinander zu verschweißen, die einen Radius aufweisen. In einem solchen Fall ist es nicht möglich, die Folien sauber zu verschweißen, solange beide Rollen von der gemeinsamen Achse angetrieben werden. Der Kurvenradius ist bei der inneren Rolle geringer als bei der äußeren Druckrolle und würde zu einer ungleichmäßigen Bewegung der inneren Rolle führen, bei der diese rutscht und es kommt zu Faltenwurf an den Folien. Aus diesem Grunde muss man bei Ausführung einer Schweißnaht entlang einer gekrümmten Linie eine Rolle von dem Antrieb der Achse entkoppeln. Bei den bekannten Geräten ist dies nur mit erheblichem Aufwand möglich, indem man beispielsweise Schraubverbindungen löst, die die Laufrolle drehfest mit der Antriebsachse verbinden. Dies ist jedoch in der Praxis zeitraubend und aufwendig, insbesondere wenn man verschiedene gerade und gekrümmte Schweißnähte herstellen muss, so dass ständige Montagevorgänge erforderlich sind.

Eine Planenschweißmaschine mit den Merkmalen der eingangs genannten Gattung ist in der US 4 440 588 A beschrieben. Bei dieser bekannten Planenschweißmaschine ist eine antreibbare Hinterachse mit zwei Rollen in den jeweiligen Endbereichen vorgesehen sowie eine ebenfalls antreibbare Vorderachse mit einer etwa mittig angeordneten Rolle. Mittels eines umlegbaren Hebels kann man ein motorisch angetriebenes Zahnrad durch eine Zugbewegung in Längsrichtung der Maschine außer Eingriff bringen mit einem weiteren Zahnrad, welches auf der Hinterachse angeordnet ist, wodurch die Hinterachse und auch die mit dieser über eine Kette antriebsmäßig gekoppelte Vorderachse antriebslos geschaltet und alle drei Rollen auf beiden Achsen in eine frei drehbare Stellung gebracht werden. Das Umlegen des Hebels bewirkt somit die anschließende freie Drehbarkeit aller Rollen, während eine selektive Antriebslosigkeit nur einer Rolle nicht vorgesehen ist.

Hier setzt die vorliegende Erfindung ein. Die Aufgabe der vorliegenden Erfindung besteht darin, eine Planenschweißmaschine der eingangs genannten Gattung zur Verfügung zu stellen, bei der man mit vergleichsweise geringem Aufwand eine Umstellung aus der Eingriffsstellung, bei der beide Rollen von der Achse angetrieben werden, in eine neutrale Stellung vornehmen kann, bei der eine Rolle, insbesondere die Laufrolle von der Antriebsachse entkoppelt und somit frei drehbar ist.

Die Lösung dieser Aufgabe liefert eine Planenschweißmaschine der eingangs genannten Gattung mit den Merkmalen des Hauptanspruchs.

Erfindungsgemäß ist vorgesehen, dass wenigstens eine der Rollen (Druckrolle oder Laufrolle) durch Herausziehen in Achsrichtung aus einer Stellung, in der sie im kraftschlüssigen Eingriff mit der angetriebenen Achse steht, in eine neutrale Stellung bringbar ist, in der sie von der Achse entkoppelt und gegenüber dieser frei drehbar ist.

Gemäß einer bevorzugten Aufgabenlösung kann man beispielsweise wenigstens eine Rolle entgegen einen Rastwiderstand aus der Eingriffsstellung herausziehbar ausbilden. Dies ermöglicht eine einfache Handhabung, da lediglich etwas Kraft bei einer auf die Rolle ausgeübten Zugbewegung ausgeübt werden muss, um den Rastwiderstand zu überwinden und anschließend ist die Rolle frei drehbar, dass heißt von dem auf die Druckrolle einwirkenden Antrieb entkoppelt, so dass man mit der Maschine beim Verschweißen von Planen oder Folien Kurvenbahnen fahren kann. Das Entkoppeln der Rolle von der Achse kann also ohne Zuhilfenahme eines Werkzeugs nur mit einem einfachen Handgriff erfolgen.

Dabei kann man bevorzugt vorsehen, dass die Rolle sowohl in der Eingriffsstellung als auch in der neutralen Stellung jeweils durch Einrasten in axialer Richtung fixiert ist. Somit ist die Rolle in jeder der beiden Positionen sicher fixiert. Durch ein solches Einrasten wird der Bedienungsperson signalisiert, dass die jeweils gewünschte andere Position erreicht ist, was sich in der Regel auch durch ein mit dem Einrasten verbundenes Geräusch bemerkbar macht. Die Rolle wird zudem in der jeweils gewünschten Position sicher gegenüber der Achse arretiert, das heißt ein selbstständiges ungewolltes Verstellen im Betrieb kann nicht vorkommen. Dennoch lässt sich das Verstellen in die jeweils andere Position ohne großen Kraftaufwand vornehmen, da es genügen kann, wenn beim Verstellen ein verhältnismäßig geringer Rastwiderstand überwunden werden muss.

Vorzugsweise ist weiterhin vorgesehen, dass an der Achse einerseits sowie im Bereich der Rolle andererseits jeweils miteinander korrespondierende Eingriffselemente vorhanden sind, die in der Eingriffsstellung eine drehfeste formschlüssige und/oder kraftschlüssige Verbindung zwischen der Rolle und der Achse herstellen. Diese korrespondierenden Eingriffselemente können in unterschiedlichster Weise geformt und ausgestaltet sein. Wichtig ist dabei lediglich, dass in der Eingriffsstellung die Rolle an der Achse drehfest festgelegt ist und die Rolle sich damit bei Antrieb der Achse mitdreht, was üblicherweise der Fall ist, wenn mit der Maschine geradlinig verlaufende Schweißnähte hergestellt werden.

Es kann beispielsweise so sein, dass an der Achse wenigstens ein Stift, Zapfen, Bolzen, eine Feder oder ein Vorsprung gebildet ist, welcher in der Eingriffsstellung in eine korrespondierende Nut, Aussparung oder Aufnahme an der Rolle eingreift. Es kann beispielsweise auch ein Eingriff über Zähne oder dergleichen hergestellt werden.

Gemäß einer besonders bevorzugten konstruktiven Ausgestaltung ist vorgesehen, dass sich als Eingriffselement der Achse wenigstens ein Stift, Zapfen, Bolzen, eine Feder oder ein Vorsprung an der Achse radial nach außen hin erstreckt und eine korrespondierende Nut, Aussparung oder Aufnahme dieses Eingriffselement in der Eingriffsstellung formschlüssig aufnimmt. Grundsätzlich kann es aber auch umgekehrt so sein, dass ein vorstehendes Element der genannten Art sich an der Rolle, beispielsweise im Bereich der Nabe befindet und dann die Achse entsprechende Aussparungen, Nuten oder dergleichen aufweist.

Weiterhin ist vorteilhaft, wenn sich als Eingriffselement der Rolle wenigstens eine Nut, Aussparung oder Aufnahme an einem sich an der innen liegenden Seite der Rolle in axialer Richtung erstreckenden Bund befindet. Dieser Bund übernimmt dann quasi die Funktion der Nabe für die Achse. Der Bund kann im Umriss rund, das heißt insgesamt zylindrisch (Ringbund) sein, was eine einfache Herstellung ermöglicht. Es kann aber auch ein axialer Fortsatz mit anderem, beispielsweise rechteckigen oder vieleckigen Umriss sein. Es ist aber ebenso gut auch möglich, dass die Nabe sich dierkt an der Rolle befindet, also nicht in Form eines solchen axial vorstehenden Bundes.

Gemäß einer bevorzugten Weiterbildung der erfindungsgemäßen Aufgabenlösung ist vorgesehen, dass an der Rolle für wenigstens ein Eingriffselement der Achse wenigstens zwei Eingriffselemente in unterschiedlichen voneinander beabstandeten Drehstellungen vorgesehen sind. Dies schafft die Möglichkeit, beim Verstellen aus der neutralen gelösten in die Eingriffsstellung die Rolle in verschiedenen Umfangsstellungen an der Achse festzulegen, d.h. es ist nicht erforderlich, die Rolle sehr weit zu drehen, um den Eingriff herzustellen. Dies macht das Herstellen des Eingriffs bequemer, denn man muss die Drehstellung für das Einschieben de Rolle in die Eingriffsstellung nicht so lange suchen. Es können zwei oder mehrere solcher Drehstellungen vorgesehen sein, die ein solches Einschieben in die Eingriffsstellung zulassen.

Besonders vorteilhaft ist es, wenn an der Achse wenigstens zwei Eingriffselemente in am Umfang zueinander versetzten Stellungen vorgesehen sind. Dadurch wird eine gleichmäßigere Kräfteverteilung möglich, da die Kräfte, die in der Eingriffsstellung zwischen Rolle und Achse wirken, nicht nur im Bereich eines Eingriffselements übertragen werden. Beispielsweise kann man zwei Eingriffselemente an der Achse vorsehen und für diese am Umfang der Nabe oder des Bundes der Rolle vier korrespondierende Eingriffselemente, jeweils in gleichmäßigen Umfangsabständen von dann 90 ° angeordnet. In diesem nur beispielhaft genannten Fall ergeben sich vier verschiedene Eingriffspositionen.

Gemäß einer bevorzugten Weiterbildung der erfindungsgemäßen Aufgabenlösung ist vorgesehen, dass in dem von der Rolle aufgenommenen Bereich der Achse an dieser zwei in axialer Richtung voneinander beabstandete Rastnuten gebildet sind, die in der Eingriffsstellung bzw. in der neutralen Stellung mit einem an der Rolle vorgesehenen Arretierelement jeweils einen Rasteingriff eingehen.

Beispielsweise kann an der Rolle wenigstens ein in radialer Richtung gegen eine Federkraft bewegliches Rastelement als Arretierelement vorgesehen sein, welches in der Eingriffsstellung und/oder in der neutralen Stellung (jeweils) einen Rasteingriff mit einer an der Achse vorgesehenen Rastnut eingeht.

Besonders vorteilhaft ist es, wenn das gegen eine Federkraft in radialer Richtung bewegliche Rastelement in einer Bohrung der Rolle aufgenommen ist. Wenn man dann zum Lösen des Eingriffs beispielsweise die Rolle in axialer Richtung nach außen zieht, wird die radial einwirkende Federkraft überwunden, das bewegliche Rastelement rastet aus, wobei der Benutzer spürt, dass der Rastwiderstand überwunden wurde. Danach rastet das bewegliche Rastelement beispielsweise in einer zweiten Rastnut wieder ein, wenn die dann axial äußere neutrale Position erreicht ist. Die Rolle ist dann entkoppelt und gegenüber der Achse frei drehbar,s o dass sie bei Kurvenfahrten der Maschine von der angetriebenen Achse nicht mehr mitgenommen wird. Es wird lediglich noch die Druckrolle (die andere Rolle) angetrieben, während die vom Antrieb entkoppelte Laufrolle sich in der vom Kurvenradius vorgegebenen Geschwindigkeit dreht, so dass es nicht zu Verschiebungen mit Faltenwurf an der Folie kommt.

Die in den Unteransprüchen beschriebenen Merkmale betreffen bevorzugte Weiterbildungen der erfindungsgemäßen Aufgabenlösung. Weitere Vorteile der vorliegenden Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher erläutert. Dabei zeigen:
Figur 1 eine Seitenansicht einer Planenschweißmaschine gemäß einer beispielhaften Ausfürhrungsvariante der vorliegenden Erfindung;
Figur 2 eine Draufsicht auf die Planenschweißmaschine gemäß Figur 1;
Figur 3 eine vergrößerte Detailansicht des in Bewegungsrichtung hinteren Bereichs der Planenschweißmaschine von Figur 2 mit Druckrolle und Laufrolle, wobei die Laufrolle geschnitten ist;
Figur 4 eine ähnliche Ansicht wie in Figur 3, wobei die Laufrolle in der ausgerückten entkoppelten Stellung dargestellt ist;
Figur 5 eine perspektivische Ansicht der Laufrolle von der Innenseite her gesehen.

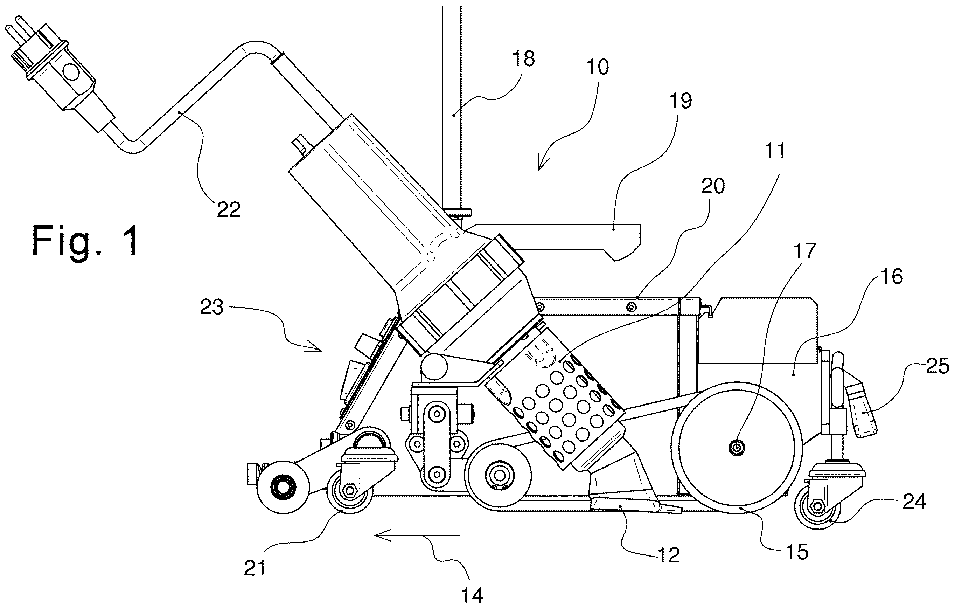

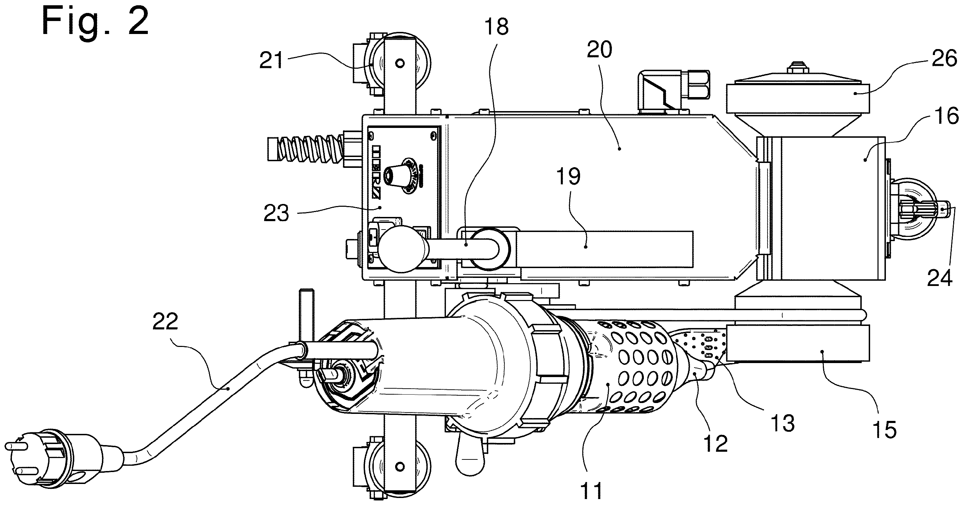

Zunächst wird auf die Figuren 1 und 2 Bezug genommen, die eine schematisch vereinfachte Seitenansicht einer beispielhaften Planenschweißmaschine 10 gemäß der Erfindung zeigt. Die Maschine weist ein Heißluftgebläse 11 auf, mittels dessen die zu verschweißenden Folienlagen etwa bis auf ihren Erweichungspunkt vorgewärmt werden. Die Heißluft tritt im Bereich einer Heißluftdüse 12 aus und zwar so dass sowohl die obere Lage als auch die untere Lage der beiden miteinander zu verschweißenden Folienlagen erwärmt werden. Dazu kann beispielsweise ein Arbeitsbereich mit einem Lochblech 13, welches man in Figur 2 erkennen kann, zwischen die beiden Folienlagen fahren und durch die Löcher gelangt Heißluft auch mit der unteren Folienlage in Kontakt. Die Maschine hat einen Antrieb und verfährt in Richtung des Pfeils 14 auf der Arbeitsebene. Es wird beispielsweise eine Druckrolle 15 angetrieben, wobei die Maschine einen Antriebsmotor, insbesondere einen Elektromotor aufweist und ein Getriebe, welches sich in einem Gehäuse 16 befindet und auf die Antriebsachse 17 einwirkt.

Die Maschine 10 hat weiterhin für die Bedienung eine zumindest im unteren Bereich etwa senkrecht nach oben hin verlaufende Führungsstange 18 sowie einen unteren etwa horizontal ausgerichteten Handgriff 19, der in geringerem Abstand oberhalb des Gehäuses 20 angeordnet ist, so dass man die Maschine, die über den Antrieb selbständig verfährt, beim Schweißen manuell führen kann. Zur Stabilisierung verfügt die Maschine über weitere Rollen 21 in ihrem vorderen Bereich an beiden Seiten, die bevorzugt als Lenkrollen ausgebildet sind. Über ein sich beim Verfahren abrollendes Kabel 22 ist die Maschine an das Stromnetz anschließbar. Die Steuer- und Regelelemente sowie Bedienungseinrichtungen für die diversen Funktionen der Maschine befinden sich an einer Bedieneinheit 23 im vorderen Bereich. Die Heißlufteinrichtung mit dem Heißluftgebläse 11 ist schwenkbar ausgebildet, damit man diese hochklappen kann, sobald die Maschine steht, da sonst die Gefahr einer örtlichen Überhitzung der Planen besteht, die diese beschädigt. Eine gleichmäßige Erwärmung der zu verschweißenden Folienlagen entsprechend den gewählten Einstellungen wie Temperatur und Vorschubgeschwindigkeit ist nur dann gegeben, wenn die Maschine fährt. Im hinteren Bereich der Maschine ist etwa mittig eine zusätzliche Rolle 24 angebracht, die bevorzugt eine Lenkrolle ist und die sich über einen Mechanismus 25 mittels eines Hebels absenken lässt, wodurch die Maschine aufgebockt wird, was zu einer Anhebung der Druckrolle 15 von der Arbeitsebene führt.

Die Planenschweißmaschine 10 arbeitet so, dass die Achse 17 motorisch angetrieben wird und das Gerät selbständig in Richtung des Pfeils 14 verfährt. Durch die Heißluft werden dabei zunächst beide Lagen der zu verschweißenden Planen erwärmt bis zur Temperatur des Erweichungspunkts. Anschließend fährt die Druckrolle 15 der Maschine über die obere Lage der Plane und drückt diese auf die untere Lage, so dass beide Lagen in ihrem Überlappungsbereich sauber miteinander verschweißt werden. Bei Verfahren der Maschine 10 entlang einer geraden Linie arbeite die Maschine in der Regel so, dass beide Rollen, also die Druckrolle 15 und auch die Laufrolle 26 über die angetriebene Hinterachse 17 der Maschine angetrieben werden. Wenn man jedoch entlang einer Kurvenlinie fahren möchte, muss die Laufrolle vom Antrieb der Achse 17 entkoppelt werden.

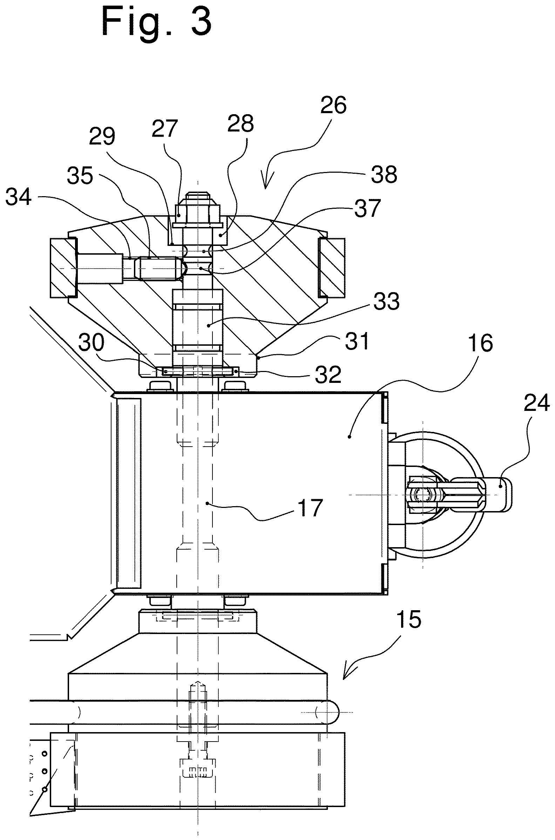

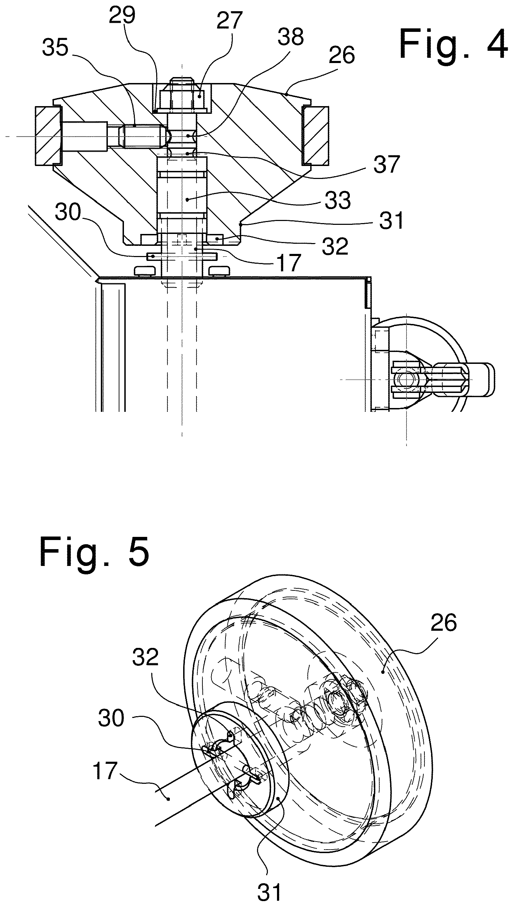

Nachfolgend wird unter Bezugnahme auf die Figuren 3, 4 und 5 die erfindungsgemäße Entkopplung der in Figur 1 erkennbaren Laufrolle 26 von dem Antrieb, der die Druckrolle 15 antreibt, erläutert. Die Laufrolle befindet sich wie man Figur 1 entnimmt auf der gleichen Achse 17 wie die Druckrolle 15 und liegt dieser gegenüber auf der anderen Seite der Maschine jenseits des Gehäuses 16 für das Getriebe. Figur 3 zeigt in der Draufsicht den hinteren Bereich der Maschine mit Druckrolle 15 und Laufrolle 26, wobei letztere horizontal geschnitten ist. Man erkennt in Figur 3 die Achse 17, auf der die beiden Rollen 15, 26 befestigt sind, wobei diese Achse 17 beide Rollen in Querrichtung der Maschine miteinander verbindet. Die Achse 17 ist in Figur 3 in ihrem mittigen Bereich gestrichelt dargestellt, da sie innerhalb des Gehäuses 16 des Getriebes verläuft. Die Laufrolle 26 kann beispielsweise durch eine Mutter 27 so auf der Achse 17 befestigt sein, dass sie sich nicht über die neutrale Position hinaus nach außen hin bewegen kann. Dazu ist an der Rolle 26 eine Ausnehmung 28 vorgesehen, die eine Anschlagfläche 29 für einen stirnseitigen Anschlag der Mutter 27 in der ausgerückten (entkoppelten Position) darstellt. Diese Position ist in Figur 4 dargestellt, während Figur 3 die Eingriffsstellung zeigt, bei der die Laufrolle 26 mit der Achse 17 in einem drehfesten Eingriff steht, so dass sie sich bei Antrieb der Achse mit dieser und somit auch mit der Druckrolle 15 gemeinsam dreht.

Das Verständnis der vorliegenden Erfindung ergibt sich aus dem Vergleich der beiden Darstellungen gemäß den Figuren 3 und 4 und wird anhand dieser erläutert. Man sieht in Figur 3, dass die Mutter 27 von der stirnseitigen Anschlagfläche 29 beabstandet ist, während in Figur 4 die Mutter 27 innenseitig an dieser Anschlagfläche 29 anliegt. Weiterhin sind in Figur 4 die Eingriffselemente an der Achse 17 erkennbar, wobei es sich hier um mehrere (insgesamt vier) über den Umfang verteilt mit Abstand zueinander angeordnete Stifte 30 handelt. An der Rolle 26 befindet sich innenseitig ein axial vorstehender Bund 31 , in dem vier Aussparungen 32 gebildet sind, die die korrespondierenden Eingriffselemente der Rolle für die Stifte 30 bilden und die so geformt sind, dass sie jeweils in etwa formschlüssig je einen der Stifte aufnehmen. Dies kann man in der perspektivischen Ansicht gemäß Figur 5 erkennen, bei der man auf die Innenseite der Laufrolle 26 schaut. Bei der entkoppelten Stellung gemäß Figur 4 liegen die vier Stifte 30 außerhalb der Aussparungen 32 und die Rolle kann sich frei um ihre Achse drehen. Die Rolle 26 ist über ein Lineargleitlager gelagert, umfassend eine in der Rolle fest sitzende Lagerbüchse 33, die sich auf dem Endstück der Achse 17 in der neutralen Position gemäß Figur 4 frei drehen kann.

In der Position gemäß Figur 3 bei eingerückter mit dem Antrieb gekoppelter Laufrolle 26 befinden sich dagegen die Stifte 30 in den Aussparungen 32, so dass ein Eingriff zwischen dem axial vorstehenden Bund 31 der Rolle 26 und den Stiften 31 und damit der Achse 17 gegeben ist, so dass sich nun bei Antrieb der Achse 17 die Rolle mit der Achse dreht.

Der Mechanismus des Ausrastens und Einrastens bei Herausziehen der Laufrolle 26 aus der eingerückten Position gemäß Figur 3 in die entkoppelte Position gemäß Figur 4 wird nun nachfolgend erläutert. In einer Radialbohrung 34 der Laufrolle 26 befindet sich ein Druckstück in Form eines radial beweglich gelagerten Stifts 35, der durch eine Feder 36 federbelastet ist, so dass er in Richtung auf die Achse 17 gedrückt wird. Die Achse 17 hat in diesem Bereich zwei beabstandete Nuten 37, 38 an ihrem Umfang. In der Eingriffsstellung gemäß Figur 3 greift der beweglich gelagerte Stift 35 mit seinem vorderen und radial inneren Ende in die erste axial weiter innen liegende Nut 37 ein. Diese Nut hat ein abgerundetes rinnenförmiges Profil und die Spitze des federnd gelagerten Stifts 35 ist ebenfalls abgerundet, man kann beispielsweise eine Teilkugelform verwenden oder eine federnd gelagerte Kugel in einer Führung. Wirt eine Zugkraft auf die Laufrolle 26 axial nach außen ausgeübt, dann springt die Kugelspitze des Stifts 35 aus der Nut 37 und bewegt sich etwas in radialer Richtung, so dass ein Ausrasten aus der Nut mit einem Rastwiderstand erfolgt. Die Laufrolle 26 bewegt sich axial nach außen, so dass dann die Kugelspitze des Stifts 35 in die zweite weiter außen liegende Nut 38 wieder einrastet, wobei nun die Stellung gemäß Figur 4 erreicht ist. Die Laufrolle ist durch dieses erneute Einrasten wieder lagefixiert. Der Eingriff zwischen den Stiften 30 und den Aussparungen 32 ist dabei wie man in Figur 4 erkennt gelöst und die Laufrolle 26 dreht sich folglich bei Antrieb der Achse 17 nicht mehr mit.

### Bezugszeichenliste

- 10: Planenschweißmaschine
- 11: Heißluftgebläse
- 12: Heißluftdüse
- 13: Lochblech
- 14: Pfeil
- 15: Druckrolle
- 16: Gehäuse
- 17: Achse
- 18: Führungsstange
- 19: Handgriff
- 20: Gehäuse
- 21: Rollen
- 22: Kabel
- 23: Bedieneinheit
- 24: Rolle
- 25: Mechanismus
- 26: Laufrolle
- 27: Mutter
- 28: Ausnehmung
- 29: Anschlagfläche
- 30: Stifte
- 31: Bund
- 32: Aussparungen
- 33: Lagerbüchse
- 34: Radialbohrung
- 35: Stift
- 36: Feder
- 37: Nut
- 38: Nut

## Patentansprüche

1. Planenschweißmaschine zum Verschweißen wenigstens zweier in einander bereichsweise überlappenden Lagen liegenden Kunststofffolien, umfassend eine Heißluftvorrichtung zur Erwärmung des Folienmaterials sowie weiterhin umfassend wenigstens eine in Nähe der Heißluftvorrichtung und in Bewegungsrichtung der Maschine gesehen hinter der Heißluftvorrichtung angeordnete Druckrolle sowie eine mit der Druckrolle über eine gemeinsame Achse verbundene und zu dieser parallele beabstandete Laufrolle sowie umfassend einen Antrieb für diese Achse,
wobei wenigstens eine der Rollen (Druckrolle 15 oder Laufrolle 26) aus einer Stellung, in der sie im kraftschlüssigen Eingriff mit der angetriebenen Achse (17) steht, in eine neutrale Stellung bringbar ist, in der sie von der Achse entkoppelt und gegenüber dieser frei drehbar ist, **dadurch gekennzeichnet, dass** das Bringen wenigstens einer Rolle in die neutrale Stellung durch Herausziehen der Rolle (15, 26) in Achsrichtung erfolgt.

2. Planenschweißmaschine nach Anspruch 1, **dadurch gekennzeichnet, dass** die Rolle (26) entgegen einen Rastwiderstand aus der Eingriffsstellung herausziehbar ist.

3. Planenschweißmaschine nach Anspruch 1 oder 2, **dadurch gekennzeichnet, dass** die Rolle (26) sowohl in der Eingriffsstellung als auch in der neutralen Stellung jeweils durch Einrasten in axialer Richtung fixiert ist.

4. Planenschweißmaschine nach einem der Ansprüche 1 bis 3, **dadurch gekennzeichnet, dass** an der Achse (17) einerseits sowie im Bereich der Rolle (26) andererseits jeweils miteinander korrespondierende Eingriffselemente (30, 32) vorgesehen sind, die in der Eingriffsstellung eine drehfeste formschlüssige und/oder kraftschlüssige Verbindung zwischen der Rolle und der Achse herstellen.

5. Planenschweißmaschine nach Anspruch 4, **dadurch gekennzeichnet, dass** an der Achse wenigstens ein Stift (30), Zapfen, Bolzen, eine Feder oder ein Vorsprung gebildet ist, welcher in der Eingriffsstellung in eine korrespondierende Nut, Aussparung (32) oder Aufnahme an der Rolle eingreift.

6. Planenschweißmaschine nach einem der Ansprüche 4 oder 5, **dadurch gekennzeichnet, dass** sich als Eingriffselement der Achse (17) wenigstens ein Stift (30), Zapfen, Bolzen, eine Feder oder ein Vorsprung an der Achse radial nach außen hin erstreckt und eine korrespondierende Nut, Aussparung (30) oder Aufnahme dieses Eingriffselement in der Eingriffsstellung formschlüssig aufnimmt.

7. Planenschweißmaschine nach einem der Ansprüche 4 bis 6, **dadurch gekennzeichnet, dass** sich als Eingriffselement der Rolle (26) wenigstens eine Nut, Aussparung (32) oder Aufnahme an einem sich an der innen liegenden Seite der Rolle in axialer Richtung erstreckenden Bund (31) befindet.

8. Planenschweißmaschine nach einem der Ansprüche 4 bis 7, **dadurch gekennzeichnet, dass** an der Rolle (26) für wenigstens ein Eingriffselement (30) der Achse (17) wenigstens zwei korrespondierende Eingriffselemente (30) in unterschiedlichen voneinander beabstandeten Drehstellungen vorgesehen sind.

9. Planenschweißmaschine nach einem der Ansprüche 4 bis 8,
**dadurch gekennzeichnet, dass** an der Achse (17) wenigstens zwei Eingriffselemente (30) in am Umfang zueinander versetzten Stellungen vorgesehen sind.

10. Planenschweißmaschine nach einem der Ansprüche 2 bis 9,
**dadurch gekennzeichnet, dass** in dem von der Rolle (26) aufgenommenen Bereich der Achse (17) an dieser zwei in axialer Richtung voneinander beabstandete Rastnuten (37, 38) gebildet sind, die in der Eingriffsstellung bzw. in der neutralen Stellung mit einem an der Rolle vorgesehenen Arretierelement (35) jeweils einen Rasteingriff eingehen.

11. Planenschweißmaschine nach einem der Ansprüche 2 bis 10,
**dadurch gekennzeichnet, dass** an der Rolle (26) wenigstens ein in radialer Richtung gegen eine Federkraft bewegliches Rastelement als Arretierelement (35) vorgesehen ist, welches in der Eingriffsstellung und/oder in der neutralen Stellung (jeweils) einen Rasteingriff mit einer an der Achse vorgesehenen Rastnut (37, 38) eingeht.

12. Planenschweißmaschine nach Anspruch 11,
**dadurch gekennzeichnet, dass** das gegen eine Federkraft in radialer Richtung bewegliche Rastelement (35) in einer Bohrung (34) der Rolle (26) aufgenommen ist.

## Claims

1. Tarpaulin welding machine for welding at least two plastics films which are located in layers which partially overlap one another, comprising a hot air device for heating the film material and further comprising at least one pressure roller arranged in the vicinity of the hot air device and, viewed in the direction of movement of the machine, to the rear of the hot air device, as well as a tracking roller connected to the pressure roller via a common axle and spaced apart in parallel therefrom and comprising a drive for this axle,
wherein at least one of the rollers (pressure roller 15 or tracking roller 26) is able to be brought from a position in which it is in non-positive engagement with the driven axle (17) into a neutral position in which said roller is decoupled from the axle and is freely rotatable relative thereto, **characterised in that** at least one roller is brought into the neutral position by pulling out the roller (15, 26) in the axial direction.

2. Tarpaulin welding machine according to claim 1, **characterised in that** the roller (26) is able to be pulled out of the engagement position counter to a latching resistance.

3. Tarpaulin welding machine according to claim 1 or 2, **characterised in that** the roller (26) is fixed both in the engagement position and in the neutral position, in each case by latching in the axial direction.

4. Tarpaulin welding machine according to one of claims 1 to 3, **characterized in that** in each case engagement elements (30, 32) corresponding to one another are provided, on the one hand, on the axle (17) and, on the other hand, in the region of the roller (26), said engagement elements in the engaged position producing a positive and/or non-positive connection between the roller and the axle which is fixed in terms of rotation.

5. Tarpaulin welding machine according to claim 4, **characterised in that** at least one pin (30), journal, bolt, a tongue or a projection, which in the engaged position engages in a corresponding groove, recess (32) or receiver on the roller, is formed on the axle.

6. Tarpaulin welding machine according to one of claims 4 or 5, **characterised in that**, as the engagement element of the axle (17), at least one pin (30), journal, bolt, a tongue or a projection on the axle extends radially outwardly and a corresponding groove, recess (30) or receiver positively receives this engagement element in the engaged position.

7. Tarpaulin welding machine according to one of claims 4 to 6, **characterised in that**, as the engagement element of the roller (26), at least one groove, recess (32) or receiver is located on a collar (31) extending on the internal face of the roller in the axial direction.

8. Tarpaulin welding machine according to one of claims 4 to 7, **characterised in that** for at least one engagement element (30) of the axle (17) at least two corresponding engagement elements (30) are provided on the roller (26), said two corresponding engagement elements being spaced apart from one another in different rotational positions.

9. Tarpaulin welding machine according to one of claims 4 to 8, **characterised in that** at least two engagement elements (30) are provided on the axle (17) in positions offset to one another on the circumference.

10. Tarpaulin welding machine according to one of claims 2 to 9, **characterised in that**, in the region of the axle (17) received by the roller (26), two latching grooves (37, 38) spaced apart from one another in the axial direction are formed on said axle, said latching grooves in the engaged position and/or in the neutral position in each case forming a latching engagement with a blocking element (35) provided on the roller.

11. Tarpaulin welding machine according to one of claims 2 to 10, **characterised in that** at least one latching element which is movable in the radial direction counter to a spring force is provided on the roller (26) as a blocking element (35) which in the engaged position and/or in the neutral position (in each case) forms a latching engagement with a latching groove (37, 38) provided on the axle.

12. Tarpaulin welding machine according to claim 11, **characterised in that** the latching element (35), which is movable counter to a spring force in the radial direction, is received in a bore (34) of the roller (26) .

## Revendications

1. Soudeuse de bâche destinée à souder au moins deux films de matière plastique placés en couches qui se chevauchent au moins par endroits, comprenant un dispositif d'air chaud destiné à chauffer la matière du film et comprenant par ailleurs un galet de pression placé à proximité du dispositif d'air chaud et, vu dans la direction de déplacement de la machine, derrière le dispositif d'air chaud, ainsi qu'un galet de roulement relié par l'intermédiaire d'un axe commun avec le galet de pression et écarté à la parallèle par rapport à celui-ci et comprenant un entraînement pour ledit axe, au moins l'un des galets (galet de pression 15 ou galet de roulement 26) pouvant être amené d'une position dans laquelle il est en engagement par complémentarité de force avec l'axe (17) entraîné dans une position neutre, dans laquelle il est désaccouplé de l'axe et en rotation libre par rapport à celui-ci, **caractérisée en ce que** l'amenée en position neutre d'au moins un galet s'effectue en retirant galet (15, 26) dans la direction axiale.

2. Soudeuse de bâche selon la revendication 1, **caractérisée en ce que** le galet (26) peut se retirer de la position d'engagement à l'encontre d'une résistance à cran.

3. Soudeuse de bâche selon la revendication 1 ou 2, **caractérisée en ce qu'**aussi bien dans la position d'engagement que dans la position neutre, le galet (26) est fixé chaque fois par enclenchement dans la direction axiale.

4. Soudeuse de bâche selon l'une quelconque des revendications 1 à 3, **caractérisée en ce que** sur l'axe (17) d'une part, ainsi que dans la zone du galet (26) d'autre part sont prévus chaque fois des éléments d'engagement (30, 32) se correspondant mutuellement, qui dans la position d'engagement établissent une liaison solidaire en rotation par complémentarité de forme et/ou par complémentarité de force entre le galet et l'axe.

5. Soudeuse de bâche selon la revendication 4, **caractérisée en ce que** sur l'axe est formé(e) au moins une goupille (30), un tenon, un boulon, un ressort ou une saillie, qui dans la position d'engagement s'engage dans une rainure, un évidement (32) ou un logement correspondant sur le galet.

6. Soudeuse de bâche selon l'une quelconque des revendications 4 ou 5, **caractérisée en ce qu'**en tant qu'élément d'engagement de l'axe (17), au moins une goupille (30), un tenon, un boulon, un ressort ou une saillie s'étend en direction radiale vers l'extérieur sur l'axe et dans la position d'engagement, reçoit par complémentarité de forme une rainure, un évidement (30) ou un logement dudit élément d'engagement.

7. Soudeuse de bâche selon l'une quelconque des revendications 4 à 6, **caractérisée en ce qu'**en tant qu'élément d'engagement du galet (26), au moins une rainure, un engagement (32) ou un logement se trouve sur un collet de butée (31) s'étendant en direction axiale sur la face située à l'intérieur du galet.

8. Soudeuse de bâche selon l'une quelconque des revendications 4 à 7, **caractérisée en ce que** pour au moins un élément d'engagement (30) de l'axe (17), au moins deux éléments d'engagement (30) correspondants sont prévus dans des positions de rotation différemment écartées l'une de l'autre sur le galet (26) .

9. Soudeuse de bâche selon l'une quelconque des revendications 4 bis 8,
**caractérisée en ce qu'**au moins deux éléments d'engagement (30) sont prévus sur l'axe (17), dans des positions décalées l'une par rapport à l'autre sur la périphérie.

10. Soudeuse de bâche selon l'une quelconque des revendications 2 à 9,
**caractérisée en ce que** dans la zone de l'axe (17) qui est réceptionnée par le galet (26) sont formées sur celui-ci deux rainures d'enclenchement (37, 38) écartées l'une de l'autre en direction axiale, qui dans la position d'engagement ou dans la position neutre entrent chacune dans un engagement par enclenchement avec un élément de blocage (35) prévu sur le galet.

11. Soudeuse de bâche selon l'une quelconque des revendications 2 à 10,
**caractérisée en ce que** sur le galet (26) est prévu au moins un élément de blocage (35) mobile à l'encontre de la force d'un ressort dans la direction radiale, qui dans la position d'engagement et/ou dans la position neutre entre (chacun) dans un engagement par enclenchement avec une rainure d'enclenchement (37, 38) prévue sur l'axe.

12. Soudeuse de bâche selon la revendication 11,
**caractérisée en ce que** l'élément d'enclenchement (35) mobile à l'encontre de la force d'un ressort dans la direction radiale est réceptionné dans un perçage (34) du galet (26).
